(19) **Europäisches Patentamt / European Patent Office / Office européen des brevets**

(11) **EP 3 276 036 B1**

(12) **EUROPEAN PATENT SPECIFICATION**

(45) Date of publication and mention
of the grant of the patent:
**11.12.2019 Bulletin 2019/50**

(21) Application number: **16772751.0**

(22) Date of filing: **28.03.2016**

(51) Int Cl.:
*C22C 38/00* (2006.01)     *B23K 35/30* (2006.01)
*C22C 38/58* (2006.01)     *C22C 38/60* (2006.01)
*C22C 38/02* (2006.01)     *C22C 38/04* (2006.01)
*C22C 38/06* (2006.01)     *C22C 38/44* (2006.01)
*C22C 38/46* (2006.01)     *C22C 38/48* (2006.01)
*C22C 38/50* (2006.01)     *C22C 38/52* (2006.01)
*C22C 38/54* (2006.01)

(86) International application number:
**PCT/JP2016/059955**

(87) International publication number:
**WO 2016/158870 (06.10.2016 Gazette 2016/40)**

(54) **STAINLESS STEEL WELD JOINT AND STAINLESS STEEL FOR FUEL REFORMER**

EDELSTAHLSCHWEISSFUGE UND EDELSTAHL FÜR BRENNSTOFFREFORMER

JOINT DE SOUDURE EN ACIER INOXYDABLE ET ACIER INOXYDABLE POUR UNITÉ DE REFORMAGE DE COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2015 JP 2015067723**

(43) Date of publication of application:
**31.01.2018 Bulletin 2018/05**

(73) Proprietor: **Nippon Steel & Sumikin Stainless Steel Corporation**
**Chiyoda-ku**
**Tokyo**
**100-0005 (JP)**

(72) Inventors:
• **HATANO, Masaharu**
**Tokyo 100-0004 (JP)**

• **MATSUYAMA, Hiroyuki**
**Tokyo 100-0004 (JP)**
• **KIMURA, Ken**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
JP-A- H04 197 581     JP-A- 2006 043 746
JP-A- 2009 012 070     JP-A- 2009 012 070
JP-A- 2009 012 071     JP-A- 2010 023 106
JP-A- 2010 160 928

## Description

### Technical Field

The present invention relates to a stainless steel weld joint excellent in oxidation resistance and high temperature strength. In particular, it relates to a weld joint joining dissimilar materials of ferritic stainless steel and austenitic stainless steel.

### Background Art

A fuel cell or other fuel reformer for generating hydrogen gas is a device that generates hydrogen from city gas, kerosene, gasoline, or other fuel using a fuel reformer catalyst. However, the catalyst operating temperature for producing hydrogen is high, so superior oxidation resistance and high temperature strength are required for the structure holding the catalyst and its peripheral parts. These high temperature characteristics are necessary for securing long-term durability as a structure. When partial destruction or deformation occurs due to oxidation damage and insufficient strength at high temperature, the performance as a hydrogen gas generator deteriorates. For this reason, stainless steel excellent in oxidation resistance and high temperature strength is used for a high temperature member.

When stainless steel is used for example for a fuel reformer, sometimes austenitic stainless steel and ferritic stainless steel are used. In the austenitic type, thin sheets of SUS310S and other austenitic stainless steel welded into tubular shapes and superposed with each other in several layers to form an integral type cylindrical structure (PLT 1) and austenitic stainless steel for welded tube structure high temperature equipment use defined in components (PLT 2) are known. On the other hand, in the ferritic type, ferritic stainless steels defined in components (PLT 3 and PLT 4) are known.

When using austenitic stainless steel and ferritic stainless steel at high temperatures, both have advantages and disadvantages. In the case of austenitic stainless steel, it has the feature of excellent high temperature strength, but the thermal expansion coefficient is large, so in some cases oxides of the surface layer may peel off due to the high temperature/low temperature thermal cycle, and the oxidation resistance may fall. In addition, austenitic stainless steels generally contain 6% or more of Ni, so the material cost is higher than that of ferritic stainless steel. On the other hand, ferritic stainless steel is generally lower in high temperature strength compared with austenitic stainless steel. However, the thermal expansion coefficient is small, so the oxidation resistance when the temperature changes is relatively good. In addition, the material cost is generally less expensive compared with austenitic stainless steel.

### Cited Reference List

### Patent Literature

PLT 1: Japanese Patent Publication No. 2003-286005A
PLT 2: Japanese Patent Publication No. 2013-166989A
PLT 3: Japanese Patent Publication No. 2003-160844A
PLT 4: Japanese Patent Publication No. 2008-156692 A

JP 2009-012070 A and JP 2010-023106 A deal with weld metals of stainless steel weld joints.

### Summary of Invention

### Technical Problem

As described above, various stainless steels and structures have been proposed for fuel reformers. However, when used for an actual member, at the present time, sometimes the durability falls due to deterioration of the-oxidation resistance, reduction of the high temperature strength, high temperature fatigue, and the like. Further, considering economy as well, members combining ferritic stainless steel and austenitic stainless steel have been proposed. However, when joining these dissimilar materials, the oxidation resistance and high temperature characteristics (deterioration of high temperature strength and high temperature fatigue) of the weld joint itself are problematic.

The present invention was made in consideration of the above circumstances and has as an object thereof to provide a stainless steel weld joint excellent in economy, high temperature characteristics, and oxidation resistance. In particular, it has as its problem to obtain a stainless steel weld joint combining ferritic stainless steel and austenitic stainless steel and having good high temperature characteristics and oxidation resistance characteristics.

**Solution to Problem**

As mentioned above, austenitic stainless steel is excellent in high temperature strength, but may deteriorate in oxidation resistance due to repeated heat cycles. On the other hand, in ferritic stainless steel, the high temperature strength is lower than that of austenitic stainless steel, but the oxidation resistance due to repeated heat cycles is good. Further, generally, ferritic stainless steel is less expensive in material cost as compared with austenitic stainless steel.

The present inventors thought that if using a welded structure of austenitic stainless steel and ferritic stainless steel, high temperature strength could be secured by the austenitic stainless steel and deterioration of the oxidation resistance accompanying thermal expansion and contraction could be alleviated. Further, if a welded structure of austenitic stainless steel and ferritic stainless steel, it was considered that the material cost could be made lower compared with a structure of austenitic stainless steel alone. The inventors fabricated weld joints from various stainless steels and weld metals in the laboratory and evaluated them for high temperature strength, high temperature fatigue, and oxidation resistance and as a result reached the present invention. The present invention relates to a stainless steel weld joint as defined in claims 1 to 3, the use of a ferritic stainless steel as defined in claim 4, and the use of a stainless steel weld joint as defined in claim 5.

Advantageous Effects of Invention

According to the present invention, it is possible to provide a stainless steel weld joint excellent in economy and high temperature characteristics. In particular, it is possible to manufacture a stainless steel weld joint suitable for a part in contact with hydrogen gas, such as a fuel reformer, more easily than before.

**Description of Embodiments**

The weld joint of the present invention and its stainless steel will be further described. The present invention is a weld joint comprising stainless steel in which 90% or more of the steel structure is occupied by the austenite phase (austenitic stainless steel), stainless steel in which 90% or more of the steel structure is occupied by the ferrite phase (ferritic stainless steel), and a weld metal. The austenitic stainless steel mainly secures the high temperature strength while the ferritic stainless steel secures the oxidation resistance. When the proportions of the phases are less than 90%, it is not possible to realize superiority in these (high temperature strength and oxidation resistance). In the weld joint described below, the chemical composition and the hardness may be ones including regions of the heat affected zone mainly comprised of weld metal and having coarsened crystal grains of the base material in ratio of 20% or less. Here, the weld joint relating to the chemical composition and the hardness is defined as including, in the measured surface, the region of the weld metal and the region in the heat affected zone (HAZ) adjacent to the weld metal and accounting for 20% or less in area ratio. In the weld joint, if possible to clearly differentiate the weld metal, the weld metal may be used to represent the chemical composition and the hardness of the weld joint. Below, first, the chemical composition and hardness of a preferable weld joint will be described in relation to the high temperature characteristics. After that, the ferritic stainless steel, austenitic stainless steel, and welding material suitable for obtaining such a weld joint will be explained.

The reasons for limiting the chemical composition and the metal structure in the weld joint of the present invention will be described next. Note that in this Description, the notations % of the elements means mass% unless otherwise specified. The chemical composition of the weld joint is influenced by the chemical composition of the base material to be welded, the chemical composition of the welding material, and the mixed state of the base material and the welding material. However, in the present invention, the object of the present invention can be attained by setting the chemical composition of the final weld joint and the metal structure as follows.

C: 0.1% or Less

C is an element effective for stabilizing the austenite phase in the weld joint of the present invention and enhancing the fatigue characteristics at high temperature use. However, excessive addition of C promotes precipitation of carbides during welding and during high temperature use, induces fatigue fracture due to hardening of the weld joint, and remarkably reduces the high temperature fatigue characteristics. Therefore, the upper limit needs to be 0.1%. Preferably, it is 0.05% or less. There is no particular need to set a lower limit for the amount of C, but an extreme decrease invites a remarkable increase in production cost, so the preferred lower limit is 0.001%. It is more preferably 0.01%.

Si: 3% or Less

Si is an effective element for enhancing the oxidation resistance of the present invention in the weld joint of the present invention and is an element effective for increasing the material strength. It is not necessary to set the lower limit particularly for the amount of Si, but in order to realize these effects, it is preferable to set it to 0.3% or more. It is more preferably 0.5% or more. On the other hand, excessive addition of Si promotes the formation of intermetallic compounds such as the sigma phase in the weld zone, induces fatigue fracture due to hardening of the weld joint at high temperature use, and remarkably reduces high temperature fatigue characteristics. Therefore, the upper limit needs to be 3%. It is preferably 2.5% or less, more preferably 2.0% or less.

Mn: 3% or Less

Mn is an element effective for stabilizing the austenite phase and enhancing the fatigue property at high temperature use in the weld joint of the present invention. However, excessive addition of Mn invites an increase of S-based inclusions in addition to deterioration of oxidation resistance, induces fatigue fracture of the weld joint at high temperature use, and causes deterioration of high temperature fatigue characteristics. Therefore, the upper limit needs to be made 3%. It is preferably 2.5% or less, more preferably 2.0% or less.

Cr: 17 to 25%

Cr is an essential element for enhancing oxidation resistance and high temperature characteristics in the weld joint of the present invention. In order to obtain this effect sufficiently, the lower limit of Cr needs to be 17%. Preferably it is 18% or more. However, excessive addition of Cr requires the base metal or welding material to be made of high Cr steel. This invites an increase in cost and, in addition, promotes the precipitation of intermetallic compounds, induces fatigue fracture of the weld joint at high temperature use, and leads to deterioration of the high temperature fatigue characteristics. Therefore, the upper limit needs to be 25%. Preferably it is 23% or less.

Ni: 7 to 20%

Ni is an extremely effective element for stabilizing the austenite phase in the weld joint of the present invention and enhancing both fatigue characteristics and oxidation resistance at high temperature use. In particular, it suppresses hardening at the time of using the weld joint at a high temperature and greatly contributes to improvement of the fatigue characteristics. The amount of Ni is set to 7% or more in order to realize these effects. It is preferably 8% or more. However, excessive addition of Ni requires that the base metal or welding material be made of high Ni steel. This invites an increase in cost and, in addition, promotes the precipitation of intermetallic compounds to induce fatigue fracture of the weld joint at high temperature use and leads to a decrease in high temperature fatigue characteristics. Therefore, the upper limit needs to be 20%. It is preferably 15% or less, more preferably 12% or less.

N: 0.2%

N is an element effective for stabilizing the austenite phase in the weld joint of the present invention and enhancing the fatigue property at high temperature use. However, excessive addition of N promotes nitride precipitation during welding and during high temperature use, induces fatigue fracture due to hardening of the weld joint, and remarkably reduces the high temperature fatigue characteristics. Therefore, the upper limit needs to be 0.2%. Preferably, it is set to 0.1% or less. There is no particular need to set a lower limit for the amount of N, but an extreme decrease invites a remarkable increase in production costs, so the preferred lower limit is 0.001%. It is more preferably 0.01%.

Metal Structure

The hardness of the weld joint is not unambiguously determined only by the chemical composition described above and is affected to a large extent by the metal structure. In the weld joint according to the present invention, it is important to satisfy the above limited chemical composition and to make the Vicker's hardness (Hv) of the surface of the weld joint 250 or less. If it exceeds Hv 250, fatigue failure due to hardening of the weld joint at high temperature use is induced, and the high temperature fatigue characteristics remarkably deteriorate. Preferably, it is Hv 220 or less, more preferably Hv 200 or less. The lower limit of the hardness does not particularly have to be set, but in order to guarantee high temperature fatigue characteristics by joining to the base material, not by excessively reducing the C and N contents, it is made Hv 100 or more, preferably Hv 120 or more, more preferably Hv 150 or more.

As described above, in order to obtain the target high temperature fatigue characteristics of the present invention, it is indispensable to lower the hardness of the weld joint. The hardness of the weld joint increases due to precipitation of fine Cr-containing carbonitrides of 0.1 μm or less size formed in the cooling process after welding. In particular, in the case of welding dissimilar materials of austenitic and ferritic steels, the hardness increases easily due to ferritic base materials having a small solid solubility limit of C and N. This causes fatigue failure at high temperature use. To suppress such a rise of hardness, it is effective to use a welding material of austenitic stainless steel in order to reduce the weld zone of the ferritic stainless steel itself. Furthermore, in order to efficiently suppress the rise in hardness described above, it is preferable that the metal structure of the weld joint have a precipitation size (equivalent spherical diameter) of the carbonitrides reduced to less than 0.01 μm and have a volume fraction of the precipitate controlled to 0.01 mass% or less in terms of the amount of residual Cr. For such control of the metal structure, it is preferable to reduce the heat input during welding to 1000J/cm or less or to temper the structure by heating to 800°C or more after welding and then air cooling. This is particularly useful when no welding material is used. By controlling the structure in this way, a desired surface hardness (Vicker's hardness on the surface of the weld joint) can be obtained.

Next, the steel composition of the ferritic stainless steel used as the base material of the weld joint will be described.

C: When added in a large amount to ferritic stainless steel, this invites hardening of the material and sensitization at the weld heat affected zone, so a lower content is preferable. The upper limit was therefore made 0.03%. The lower limit was made 0.001% considering the refining cost at the time of production. It is preferably 0.003 to 0.015%.

Si: This is used as an element for deoxidation. It is preferably greater from the viewpoint of oxidation resistance. However, if it is excessively added, cracking tends to occur at the time of production, so the upper limit was set to 3.0% or less. Desirably it is 1.0% or less. The lower limit was made 0.01% in consideration of the manufacturing cost. More preferably, it is 0.05 to 0.8%.

Mn: This is an element that improves oxidation resistance by a balance with Si. Excessive addition lowers corrosion resistance, so the upper limit was set to 2.0% or less. The lower limit was made 0.01% in consideration of the manufacturing cost. It is preferably 0.05 to 0.5%.

P: P is an element which segregates at the grain boundary and invites hardening of the material, so was set to 0.040% or less. Desirably, it is 0.030% or less, more desirably 0.020% or less. There is no particular need to define the lower limit, but P often enters from the material. Making P less than 0.010 increases the material cost, so it is preferably 0.010%.

S: When generating a large amount of sulfide, the corrosion resistance is lowered, so a lower content is preferable. This was made 0.010% or less. Desirably, it is 0.003% or less.

Cr: Cr is an element necessary for securing the basic characteristic of stainless steel, that is, corrosion resistance, and the corrosion resistance and heat resistance (high temperature strength, high temperature fatigue characteristics, and oxidation resistance) important in the present invention, so addition of 15.0% or more is required. However, addition of a large amount invites a decrease in toughness at the time of production, so the upper limit was set to 19.5%.

Ni: Ni is an element for improving corrosion resistance. However, addition of a large amount not only invites hardening of the material, but also lowers the ferrite phase fraction, so the upper limit was set to 3.0%. It is preferably 0.6% or less. There is no particular need to prescribe the lower limit, but this unavoidably enters from the material, so it is difficult to make it 0.01% or less, therefore 0.01% is preferably made the lower limit.

N: N has a small solid solubility limit in ferritic systems. Most of it exists in steel as nitrides. A large amount of addition increases the amount of nitrides and sometimes causes the fatigue characteristics to deteriorate, so the upper limit was set to 0.06%. The lower limit was set at 0.001% from the viewpoint of the manufacturing cost. It is preferably 0.005 to 0.020%.

A1: This is added as an element improving the oxidation resistance. A large amount of addition invites deterioration of toughness at the time of production, so the upper limit was set to 5.5. The lower limit was set at 0.001% in consideration of the manufacturing cost. It is preferably 0.003 to 0.10%.

Ti: Ti has the effect of fixing C and N as precipitates, reducing the solid solution C and N in the steel, and improving the workability. When the amount of addition is too large, a fall in the toughness at the time of production and deterioration of the surface properties are caused, so the upper limit was set to 0.25%. The lower limit was set at 0.001% considering manufacturability. The preferred range is 0.002 to 0.18%.

Nb: Nb also produces compounds with C and N similarly to Ti and has the effect of reducing the amounts of solid solution C and N in the steel and improving workability. Further, Nb contributes to improvement of high temperature strength, so it is proactively added depending on the part. Addition of more than 0.60% causes the manufacturability to remarkably deteriorate, so this was set as the upper limit. The lower limit was set at 0.001% in consideration of manufacturability. It is preferably from 0.003 to 0.45%.

Further, Ti, Nb, C, and N satisfy the following formula (1):

$$Ti/48 + Nb/93 \geq 2(C/12 + N/14) \quad \cdots (1)$$

If the relationship between these elements does not satisfy the expression (1), the corrosion resistance of the weld heat affected zone of the ferritic stainless steel decreases.

Next, the steel composition of the austenitic stainless steel used as the base material of the weld joint will be described.

C: This is an element effective for stabilizing the austenitic structure. However, as the content increases, deterioration of the corrosion resistance is invited, so it is set to 0.1% or less. The lower limit was set at 0.001% considering the manufacturing cost. It is preferably 0.01 to 0.08%, more preferably 0.01 to 0.05%.

Si: This is an element used for deoxidation. From the viewpoint of oxidation resistance, the more, the more desirable, but excessive addition invites hardening of the material and causes deterioration of manufacturability, so the content was set to 4.0% or less. Desirably, the content is made 3.0% or less. The lower limit was made 0.01% in consideration of the manufacturing cost. More preferably, it is 0.3 to 1.2%.

Mn: This is an element necessary for stabilizing the austenitic structure. Excessive addition lowers oxidation resistance and corrosion resistance, so 4.0% or less was set. The lower limit was made 0.01% in consideration of the manufacturing cost. Preferably, the content is 0.2 to 3.0%, more preferably 0.3 to 1.2%.

P: P is an element which segregates at the grain boundary and invites hardening of the material, so it is set to 0.040% or less. Desirably it is 0.030% or less, more desirably 0.020% or less. There is no particular need to define the lower limit, but P often enters from the material. Making P less than 0.010 increases the material cost, so it is preferably made 0.010%.

S: S lowers the hot workability at the time of production and if remaining in the product as precipitates, lowers the corrosion resistance, so is preferably low, therefore was made 0.004% or less. Desirably, it is 0.001% or less.

Cr: Cr is an element necessary for securing the basic characteristic of stainless steel, that is, corrosion resistance, and the high temperature strength and high temperature fatigue characteristic important in the present invention, therefore addition of 15.0% or more is required. However, addition of a large amount invites deterioration of the hot workability and toughness at the time of production, so the upper limit was made 26.0%. It is preferably 19.0 to 25.5%.

Ni: Ni is an element necessary for stabilizing the austenitic structure and securing the strength at high temperature, so is made 7.0% or more. However, when the content is high, the hardness of the material is increased and the material cost is increased, so the content was set to 23.0% or less. It is preferably 8.0 to 21.0%.

N: This is an element effective for stabilizing the austenitic structure. However, if the content increases, the workability deteriorates and the hot workability deteriorates, so it is set to 0.25% or less. The lower limit was set at 0.001% considering the manufacturing cost.

Al: This is an element for deoxidation, but addition of a large amount invites hardening of the material, so the upper limit was made 0.05 or less. The level of unavoidable entry does not greatly affect the material properties, so the lower limit does not need to be particularly prescribed, but if considering the manufacturing cost, the limit is preferably made 0.001%. The preferable range of the amount of Al is 0.002 to 0.03%.

Below, the elements proactively added or the elements that may enter as impurities will be described. In ferritic stainless steel, it is preferable to add the following elements. Cu, Mo, Sn, W, Co, Sb, Ga, Ta: Cu, Mo, Sn, W, Co, Sb, Ga, and Ta are elements which may enter from scraps of the starting material and are effective for improving the corrosion resistance, but even if excessively added, the cost is increased and the productivity is lowered, so Cu≤2.5%, Mo≤2.1%, Sn≤0.03%, W≤0.30%, Co≤0.30%, Sb≤0.30%, Ga≤0.10%, and Ta≤0.10%. The lower limit was made the unavoidable level. In each case, it was made 0.001%.

V, Zr: V and Zr bond with C and N to form precipitates and reduce solid solution C and N in the steel, so are effective for improving intergranular corrosion resistance, but excessive addition causes deterioration of the surface conditions at the time of production and an increase of the production costs, so V≤0.2% and Zr≤0.03%. The lower limits were made V: 0.01% and Zr: 0.001%.

B, Mg, Ca: B, Mg, and Ca are elements effective for improving hot workability, but excessive addition lowers weldability, so B≤0.002%, Mg≤0.002%, and Ca≤0.002%.

REM: La, Ce, Y, etc. These are elements effective for improving oxidation resistance and improving hot workability, but excessive addition invites hardening of the material, so the content is made ≤0.01%.

In the austenitic stainless steel, it is preferable to add the following elements.

Cu, Mo, Sn, W, Co, Sb, Ga, Ta: Cu, Mo, Sn, W, Co, Sb, Ga, and Ta are elements which may enter from the scraps of the starting material and are effective for improving corrosion resistance. However, even if they are excessively added, the cost is increased and the productivity is lowered, so Cu≤0.6%, Mo≤2.4%, Sn≤0.03%, W≤0.30%, Co≤1.0%, Sb≤0.30%, Ga≤0.10%, and Ta≤0.10%. The lower limits were made the unavoidable level. In each case, it was made 0.001%.

V, Zr, Ti, Nb: Ti, Nb, V, and Zr bond with C and N to form precipitates and reduce solid solution C and N in the steel, so are effective for improving intergranular corrosion resistance. However, excessive addition causes deterioration of the surface properties at the time of production, so Ti≤0.35%, Nb≤0.30%, V≤0.2%, and Zr≤0.03%. The lower limits were Ti: 0.03%, Nb: 0.03%, V: 0.01%, and Zr: 0.001%.

B, Mg, Ca: B, Mg, and Ca are elements effective for improving hot workability, but excessive addition reduces weldability, so B≤0.002%, Mg≤0.001%, and Ca≤0.002%.

REM: La, Ce, Y, etc. These elements are effective in improving the hot workability, but excessive addition reduces the weldability, so REM≤0.01%.

Finally, the welding material will be described. When welding ferritic stainless steel and austenitic stainless steel, it is preferable to use austenitic stainless steel as the welding material.

In the case of using ferritic stainless steel as a welding material, the weld structure becomes coarse and the fatigue fracture easily occurs at high temperature use. The austenitic stainless steel used as a welding material referred to here shows the Steel Types 307, 308, 309, 310, 316, and other austenitic stainless steel described in JIS Z 3321. Further, it includes all of these steel types with L, Si, Mo, LSi, LNb, LMo, and other codes appended to their ends. That is, the metal structure of the welding material is preferably a material mainly comprised of austenitic stainless steel.

If not using a welding material, the weld metal parts where the two stainless steels are fused together easily becomes a two-phase structure of austenite and ferrite. Fracture easily occurs due to hardening of the material at the time of high temperature fatigue. However, the composition of the weld metal forming the weld zone may be a range of composition of the weld metal according to the present invention described above. The surface hardness of the weld joint portion may be Hv250 or less. If the range of composition of the weld joint according to the present invention, the weld joint itself becomes an austenite-rich structure and the high temperature properties and oxidation resistance are improved.

Further, the welding method is not particularly limited. It may be any of TIG welding, MIG welding, laser welding, resistance welding, or the like.

Examples

Below, the present invention will be specifically explained with examples, but the present invention is not limited to these examples.

Stainless steel sheets of the components shown in Table 1 were used to prepare weld joints. Table 2 shows the chemical compositions and cross-sectional hardnesses of the weld joints. The chemical composition of each weld joint was analyzed by cutting out the weld zone. The hardness of each weld joint was measured by preparing a buried cross-section sample and conducting a Vicker's hardness test. A high temperature fatigue test piece was taken centered about the weld zone and used for a high temperature flat bending fatigue test. The high temperature flat bending fatigue test raised the test piece to a predetermined temperature, bent it $10^6$ times in both directions by R=-1, then cooled it down to room temperature. This was performed for 10 cycles using this as one cycle. As the test 1, the test was conducted at a test temperature of 500°C and a stress of 200 MPa, while as the test 2, the test was conducted under conditions of 700°C and 60 MPa. Test pieces which remained unbroken after 10 cycles were evaluated as passing. This test uses a high temperature fatigue test to evaluate if it is possible to secure high temperature strength at use and utilizes thermal expansion-contraction by the level of temperature when sandwiching a cycle in the middle so as to simultaneously evaluate the oxidation resistance. Table 3 shows the test results. In the examples of the present invention, all welded structures passed and excellent high temperature characteristics were exhibited.

Table 1

| Steel type | Steel | C | Si | Mn | P | S | Cr | Ni | N | Al | Ti | Nb | Other |
|---|---|---|---|---|---|---|---|---|---|---|---|---|---|
| Austenitic stainless steel | A1 | 0.045 | 0.45 | 1.02 | 0.034 | 0.0038 | 18.1 | 8.1 | 0.035 | 0.003 | - | - | |
| | A2 | 0.019 | 0.24 | 0.87 | 0.026 | 0.0008 | 17.4 | 12.3 | 0.034 | 0.031 | - | - | 2.2Mo, 0.10V, 0.0006Ca |
| | A3 | 0.035 | 0.51 | 1.11 | 0.014 | 0.0007 | 25.2 | 19.4 | 0.029 | 0.022 | 0.01 | 0.01 | |
| | A4 | 0.056 | 3.33 | 0.92 | 0.029 | 0.0003 | 19.3 | 13.5 | 0.21 | 0.008 | - | - | 0.11V |
| | A5 | 0.083 | 1.87 | 1.51 | 0.021 | 0.0014 | 24.3 | 12.1 | 0.23 | 0.025 | - | 0.03 | 0.11Cu, 0.004Ga, 0.007Co |
| | A6 | 0.003 | 0.66 | 0.22 | 0.038 | 0.0037 | 16.1 | 7.7 | 0.065 | 0.041 | 0.02 | - | 0.02Sn, 0.06W, 0.009Zr, 0.0006B, 0.0006Mg, 0.0011Ca, 0.003REM, 0.003Sb |
| Ferritic stainless steel | F1 | 0.0035 | 0.11 | 0.14 | 0.014 | 0.0022 | 17.2 | 0.11 | 0.0078 | 0.07 | 0.19 | 0.005 | |
| | F2 | 0.013 | 0.48 | 0.06 | 0.031 | 0.0005 | 19.2 | 0.29 | 0.011 | 0.041 | 0.11 | 0.38 | 0.41Cu, 0.07V |
| | F3 | 0.019 | 2.58 | 0.31 | 0.022 | 0.001 | 18.3 | 0.07 | 0.011 | 0.004 | 0.002 | 0.33 | |
| | F4 | 0.008 | 0.15 | 0.19 | 0.033 | 0.002 | 18.9 | 0.11 | 0.012 | 0.06 | 0.08 | 0.39 | 1.91Mo, 0.02Sn, 0.003Ta |
| | F5 | 0.0045 | 0.47 | 0.23 | 0.031 | 0.0007 | 18.1 | 0.09 | 0.008 | 2.01 | 0.17 | 0.002 | 0.0009B, 0.01Sn |
| | F6 | 0.0015 | 0.05 | 0.11 | 0.025 | 0.0019 | 14.1 | 0.08 | 0.0087 | 4.8 | 0.21 | 0.01 | 0.008W, 0.06Co, 0.004Zr, 0.0006Mg, 0.0003Ca, 0.002REM, 0.002Sb, 0.003Ga |
| | F7 | 0.013 | 0.50 | 0.3 | 0.035 | 0.0005 | 19.4 | 2.0 | 0.011 | 0.065 | 0.15 | 0.25 | |

Table 2

| Steel material | Steel material | Weld material | Chemical composition of weld joint (mass%) | | | | | | Hardness weld joint Hv |
|---|---|---|---|---|---|---|---|---|---|
| | | | C | Si | Mn | Cr | Ni | N | |
| A1 | F1 | 308L | 0.013 | 0.46 | 1.32 | 19.9 | 8.8 | 0.020 | 165 |
| | F2 | | 0.014 | 0.49 | 1.31 | 20.1 | 8.8 | 0.021 | 160 |
| | F3 | | 0.014 | 0.70 | 1.33 | 20.0 | 8.8 | 0.021 | 165 |
| | F4 | | 0.013 | 0.46 | 1.32 | 20.1 | 8.8 | 0.021 | 160 |
| | F5 | | 0.013 | 0.49 | 1.33 | 20.0 | 8.8 | 0.020 | 160 |
| | F6 | 308 | 0.053 | 0.45 | 1.31 | 19.6 | 8.8 | 0.020 | 195 |
| A2 | F1 | 309L | 0.010 | 0.44 | 1.30 | 22.7 | 12.0 | 0.020 | 155 |
| | F2 | | 0.011 | 0.47 | 1.29 | 22.9 | 12.1 | 0.021 | 155 |
| | F3 | | 0.012 | 0.68 | 1.32 | 22.8 | 12.0 | 0.021 | 150 |
| | F4 | | 0.011 | 0.44 | 1.31 | 22.8 | 12.0 | 0.021 | 150 |
| | F5 | | 0.010 | 0.47 | 1.31 | 22.8 | 12.0 | 0.020 | 150 |
| | F6 | 309 | 0.050 | 0.43 | 1.30 | 22.4 | 12.0 | 0.020 | 195 |
| A3 | F1 | 308L | 0.012 | 0.46 | 1.33 | 20.6 | 10.0 | 0.020 | 160 |
| | F2 | | 0.013 | 0.50 | 1.32 | 20.8 | 10.0 | 0.020 | 160 |
| | F3 | | 0.013 | 0.71 | 1.34 | 20.8 | 9.9 | 0.020 | 155 |
| | F4 | | 0.012 | 0.47 | 1.33 | 20.8 | 10.0 | 0.020 | 155 |
| | F5 | | 0.012 | 0.50 | 1.33 | 20.7 | 9.9 | 0.020 | 160 |
| | F6 | 308 | 0.052 | 0.46 | 1.322 | 20.3 | 9.9 | 0.020 | 190 |
| A4 | F1 | 309L | 0.014 | 0.74 | 1.31 | 22.9 | 12.2 | 0.038 | 140 |
| | F2 | | 0.015 | 0.78 | 1.30 | 23.1 | 12.2 | 0.038 | 145 |
| | F3 | | 0.016 | 0.99 | 1.32 | 23.0 | 12.2 | 0.038 | 140 |
| | F4 | | 0.014 | 0.75 | 1.31 | 23.0 | 12.2 | 0.038 | 140 |
| | F5 | | 0.014 | 0.78 | 1.32 | 22.9 | 12.2 | 0.038 | 145 |
| | F6 | 309 | 0.054 | 0.74 | 1.30 | 22.5 | 12.2 | 0.038 | 200 |
| A5 | F1 | 308L | 0.017 | 0.60 | 1.37 | 20.6 | 9.2 | 0.040 | 175 |
| | F2 | | 0.018 | 0.64 | 1.36 | 20.8 | 9.2 | 0.040 | 180 |
| | F3 | | 0.018 | 0.85 | 1.38 | 20.7 | 9.2 | 0.040 | 180 |
| | F4 | | 0.017 | 0.60 | 1.37 | 20.7 | 9.2 | 0.040 | 180 |
| | F5 | | 0.017 | 0.63 | 1.37 | 20.6 | 9.2 | 0.040 | 180 |
| | F6 | 308 | 0.056 | 0.59 | 1.36 | 20.2 | 9.2 | 0.040 | 210 |
| A6 | F1 | 309L | 0.009 | 0.48 | 1.24 | 22.5 | 11.6 | 0.023 | 165 |
| | F2 | | 0.010 | 0.51 | 1.23 | 22.7 | 11.6 | 0.024 | 160 |
| | F3 | | 0.010 | 0.72 | 1.25 | 22.6 | 11.6 | 0.024 | 160 |
| | F4 | | 0.009 | 0.48 | 1.24 | 22.7 | 11.6 | 0.024 | 160 |
| | F5 | | 0.009 | 0.51 | 1.25 | 22.6 | 11.6 | 0.023 | 160 |
| | F6 | 309 | 0.048 | 0.47 | 1.23 | 22.2 | 11.6 | 0.023 | 210 |

(continued)

| Steel material | Steel material | Weld material | Chemical composition of weld joint (mass%) | | | | | | Hardness weld joint Hv |
|---|---|---|---|---|---|---|---|---|---|
| | | | C | Si | Mn | Cr | Ni | N | |
| F1 | F1 | None | 0.035 | 0.11 | 0.14 | 17.2 | 0.11 | 0.0078 | 165 |
| A3 | F2 | None | 0.020 | 0.48 | 0.35 | 21.0 | 5.1 | 0.018 | 270 |
| | F7 | None | 0.019 | 0.50 | 0.45 | 20.8 | 7.1 | 0.017 | 220 |

Table 3

| Steel material | Steel material | Weld material | Test 1 | Test 2 | |
|---|---|---|---|---|---|
| A1 | F1 | 308L | Good | Good | Inv. ex. |
| A1 | F2 | 308L | Good | Good | Inv. ex. |
| A1 | F3 | 308L | Good | Good | Ref. ex. |
| A1 | F4 | 308L | Good | Good | Inv. ex. |
| A1 | F5 | 308L | Good | Good | Ref. ex. |
| A1 | F6 | 308 | Good | Good | Inv. ex. |
| A2 | F1 | 309L | Good | Good | Inv. ex. |
| A2 | F2 | 309L | Good | Good | Inv. ex. |
| A2 | F3 | 309L | Good | Good | Ref. ex. |
| A2 | F4 | 309L | Good | Good | Inv. ex. |
| A2 | F5 | 309L | Good | Good | Ref. ex. |
| A2 | F6 | 309 | Good | Good | Inv. ex. |
| A3 | F1 | 308L | Good | Good | Inv. ex. |
| A3 | F2 | 308L | Good | Good | Inv. ex. |
| A3 | F3 | 308L | Good | Good | Ref. ex. |
| A3 | F4 | 308L | Good | Good | Inv. ex. |
| A3 | F5 | 308L | Good | Good | Ref. ex. |
| A3 | F6 | 308 | Good | Good | Inv. ex. |
| A4 | F1 | 309L | Good | Good | Inv. ex. |
| A4 | F2 | 309L | Good | Good | Inv. ex. |
| A4 | F3 | 309L | Good | Good | Ref. ex. |
| A4 | F4 | 309L | Good | Good | Inv. ex. |
| A4 | F5 | 309L | Good | Good | Ref. ex. |
| A4 | F6 | 309 | Good | Good | Inv. ex. |
| A5 | F1 | 308L | Good | Good | Inv. ex. |
| A5 | F2 | 308L | Good | Good | Inv. ex. |
| A5 | F3 | 308L | Good | Good | Ref. ex. |
| A5 | F4 | 308L | Good | Good | Inv. ex. |
| A5 | F5 | 308L | Good | Good | Ref. ex. |
| A5 | F6 | 308 | Good | Good | Inv. ex. |

(continued)

| Steel material | Steel material | Weld material | Test 1 | Test 2 | |
|---|---|---|---|---|---|
| A6 | F1 | 309L | Good | Good | Inv. ex. |
| A6 | F2 | 309L | Good | Good | Inv. ex. |
| A6 | F3 | 309L | Good | Good | Ref. ex. |
| A6 | F4 | 309L | Good | Good | Inv. ex. |
| A6 | F5 | 309L | Good | Good | Ref. ex. |
| A6 | F6 | 309 | Good | Good | Inv. ex. |
| F1 | F1 | None | Poor | Poor | Comp. ex. |
| A3 | F2 | None | Poor | Poor | Comp. ex. |
| A3 | F7 | None | Good | Good | Inv. ex. |

Industrial Applicability

The present invention can be utilized for joining dissimilar materials of ferritic stainless steel and austenitic stainless steel. In particular, it is possible to use it for stainless steel joints used in a high temperature oxidizing atmosphere of a fuel cell or other fuel reformer for producing hydrogen gas etc.

**Claims**

1. A stainless steel weld joint comprised of a weld joint made of ferritic stainless steel and austenitic stainless steel and a weld metal,
   wherein said ferritic stainless steel comprises, by mass%, C: 0.001 to 0.03%, Si: 0.01 to 3.0%, Mn: 0.01 to 2.0%, P≤0.040% , S≤0.010%, Cr: 11.0 to 19.5%, Ni≤3.0%, N: 0.001 to 0.06%, Al: 0.001 to 5.5%, Ti: 0.001 to 0.25%, and Nb: 0.001 to 0.60%, and optionally one type or two types or more of Cu: 0.001 to 0.6%, Mo: 0.001 to 2.1%, Sn: 0.001 to 0.3%, W: 0.001 to 0.30%, Co: 0.001 to 0.30%, V: 0.01 to 0.2%, Zr: 0.001 to 0.03%, B≤0.002%, Mg≤0.002%, Ca≤0.002%, REM≤0.01%, Sb: 0.001 to 0.30%, Ga: 0.001 to 0.10%, and Ta: 0.001 to 0.10%, has a relationship of Ti, Nb, C, and N satisfying the following formula (1), and has a balance of Fe and unavoidable impurities;
   wherein said austenitic stainless steel comprises, by mass%, C: 0.001 to 0.1%, Si: 0.01 to 4.0%, Mn: 0.01 to 4.0%, P≤0. 040%, S≤0.004%, Cr: 15.0 to 26.0%, Ni: 7.0 to 23.0%, N: 0.001 to 0.25%, and Al≤0.05%, and optionally one type or two types or more of Cu: 0.001 to 2.5%, Mo: 0.001 to 2.4%, Sn: 0.001 to 0.03%, W: 0.001 to 0.30%, Co: 0.001 to 1.0%, V: 0.01 to 0.2%, Zr: 0.001 to 0.03%, B≤0.002%, Mg≤0.001%, Ca≤0.002%, REM≤0.01%, Sb: 0.001 to 0.30%, Ga: 0.001 to 0.10%, Ta: 0.001 to 0.10%, Ti: 0.03 to 0.35%, and Nb: 0.03 to 0.30%, and has a balance of Fe and unavoidable impurities;
   and the weld joint has a chemical composition comprising, by mass%, C: 0.1% or less, Si: 3% or less, Mn: 3% or less, Cr: 17 to 25%, Ni: 7 to 20%, and N: 0.1% or less and having a balance of Fe and unavoidable impurities and the weld joint has a surface hardness of Hv250 or less;

$$Ti/48+Nb/93 \geq 2(C/12+N/14) \quad \cdots (1)$$

   wherein the austenitic stainless steel has a steel structure in which 90% or more of the steel structure is occupied by austenite phase, and wherein the ferritic stainless steel has a steel structure in which 90% or more of the structure is occupied by ferrite phase; wherein the weld joint is defined as including, in the measured surface, the region of the weld metal and the region in the heat affected zone HAZ adjacent to the weld metal and accounting for 20% or less in area ratio.

2. The stainless steel weld joint according to claim 1, wherein said ferritic stainless steel comprises, by mass%, one type or two types or more of Cu: 0.001 to 0.6%, Mo: 0.001 to 2.1%, Sn: 0.001 to 0.3%, W: 0.001 to 0.30%, Co: 0.001 to 0.30%, V: 0.01 to 0.2%, Zr: 0.001 to 0.03%, B≤0.002%, Mg≤0.002%, Ca≤0.002%, REM≤0.01%, Sb: 0.001 to 0.30%, Ga: 0.001 to 0.10%, and Ta: 0.001 to 0.10%.

**3.** The stainless steel weld joint according to claim 1, wherein said austenitic stainless steel comprises, by mass%, one type or two types or more of Cu: 0.001 to 2.5%, Mo: 0.001 to 2.4%, Sn: 0.001 to 0.03%, W: 0.001 to 0.30%, Co: 0.001 to 1.0%, V: 0.01 to 0.2%, Zr: 0.001 to 0.03%, B≤0.002%, Mg≤0.001%, Ca≤0.002%, REM≤0.01%, Sb: 0.001 to 0.30%, Ga: 0.001 to 0.10%, Ta: 0.001 to 0.10%, Ti: 0.03 to 0.35%, and Nb: 0.03 to 0.30%.

**4.** Use of a ferritic stainless steel having a chemical composition as defined in claim 1 or 2 for a stainless steel weld joint according to claim 1 or 2.

**5.** Use of a stainless steel weld joint according to any one of claims 1 to 3 for manufacturing a fuel reformer.


**Patentansprüche**

**1.** Eine Edelstahl-Schweißfuge, umfassend eine Schweißfuge aus ferritischem Edelstahl und austenitischem Edelstahl und einem Schweißmetall,
wobei der ferritische Edelstahl, in Massen-%, C: 0,001 bis 0,03%, Si: 0,01 bis 3,0%, Mn: 0,01 bis 2,0%, P≤0,040% , S≤0,010%, Cr: 11,0 bis 19,5%, Ni≤3,0%, N: 0,001 bis 0,06%, Al: 0,001 bis 5,5%, Ti: 0,001 bis 0,25%, und Nb: 0,001 bis 0,60%, und gegebenenfalls eine Art oder zwei Arten oder mehr von Cu: 0,001 bis 0,6%, Mo: 0,001 bis 2,1%, Sn: 0,001 bis 0,3%, W: 0,001 bis 0,30%, Co: 0,001 bis 0,30%, V: 0,01 bis 0,2%, Zr: 0,001 bis 0,03%, B≤0,002%, Mg≤0,002%, Ca≤0,002%, REM≤0,01%, Sb: 0,001 bis 0,30%, Ga: 0,001 bis 0,10%, und Ta: 0,001 bis 0,10% umfasst, eine Beziehung von Ti, Nb, C und N aufweist, die die nachstehende Formel (1) erfüllt und einen Rest von Fe und unvermeidbaren Verunreinigungen aufweist;
wobei der austenitische Edelstahl, in Massen-%, C: 0,001 bis 0,1%, Si: 0,01 bis 4,0%, Mn: 0,01 bis 4,0%, P≤0,040%, S≤0,004%, Cr: 15,0 bis 26,0%, Ni: 7,0 bis 23,0%, N: 0,001 bis 0,25%, und Al≤0,05%, und gegebenenfalls eine Art oder zwei Arten oder mehr von Cu: 0,001 bis 2,5%, Mo: 0,001 bis 2,4%, Sn: 0,001 bis 0,03%, W: 0,001 bis 0,30%, Co: 0,001 bis 1,0%, V: 0,01 bis 0,2%, Zr: 0,001 bis 0,03%, B≤0,002%, Mg≤0,001%, Ca≤0,002%, REM≤0,01%, Sb: 0,001 bis 0,30%, Ga: 0,001 bis 0,10%, Ta: 0,001 bis 0,10%, Ti: 0,03 bis 0,35%, und Nb: 0,03 bis 0,30% umfasst, und einen Rest von Fe und unvermeidbaren Verunreinigungen aufweist;
und die Schweißfuge eine chemische Zusammensetzung hat, die in Massen-% C: 0,1% oder weniger, Si: 3% oder weniger, Mn: 3% oder weniger, Cr: 17 bis 25%, Ni: 7 bis 20%, und N: 0,1% oder weniger umfasst und einen Rest von Fe und unvermeidbaren Verunreinigungen aufweist und die Schweißfuge eine Oberflächenhärte von Hv250 oder weniger aufweist;

$$\mathrm{Ti}/48 + \mathrm{Nb}/93 \geq 2(\mathrm{C}/12 + \mathrm{N}/14) \cdots (1)$$

wobei der austenitische Edelstahl eine Stahlstruktur aufweist, in der 90% oder mehr der Stahlstruktur durch eine austenitische Phase belegt ist, und wobei der ferritische Edelstahl eine Stahlstruktur aufweist, in der 90% oder mehr der Struktur durch eine ferritische Phase belegt ist;
wobei die Schweißfuge so definiert ist, dass sie in der gemessenen Oberfläche den Bereich des Schweißmetalls und den Bereich in der wärmebeeinflussten Zone HAZ, die zu dem Schweißmetall benachbart ist und 20% oder weniger, ausgedrückt als Flächenanteil, ausmacht, einschließt.

**2.** Die Edelstahl-Schweißfuge nach Anspruch 1, wobei der ferritische Edelstahl, in Massen-%, eine Art oder zwei Arten oder mehr von Cu: 0,001 bis 0,6%, Mo: 0,001 bis 2,1%, Sn: 0,001 bis 0,3%, W: 0,001 bis 0,30%, Co: 0,001 bis 0,30%, V: 0,01 bis 0,2%, Zr: 0,001 bis 0,03%, B≤0,002%, Mg≤0,002%, Ca≤0,002%, REM≤0,01%, Sb: 0,001 bis 0,30%, Ga: 0,001 bis 0,10% und Ta: 0,001 bis 0,10% umfasst.

**3.** Die Edelstahl-Schweißfuge nach Anspruch 1, wobei der austenitische Edelstahl, in Massen-%, eine Art oder zwei Arten oder mehr von Cu: 0,001 bis 2,5%, Mo: 0,001 bis 2,4%, Sn: 0,001 bis 0,03%, W: 0,001 bis 0,30%, Co: 0,001 bis 1,0%, V: 0,01 bis 0,2%, Zr: 0,001 bis 0,03%, B≤0,002%, Mg≤0,001%, Ca≤0,002%, REM≤0,01%, Sb: 0,001 bis 0,30%, Ga: 0,001 bis 0,10%, Ta: 0,001 bis 0,10%, Ti: 0,03 bis 0,35%, und Nb: 0,03 bis 0,30% umfasst.

**4.** Verwendung eines ferritischen Edelstahls mit einer chemischen Zusammensetzung wie in Anspruch 1 oder 2 definiert für eine Edelstahl-Schweißfuge nach Anspruch 1 oder 2.

**5.** Verwendung einer Edelstahl-Schweißfuge nach einem der Ansprüche 1 bis 3 zur Herstellung eines Brennstoffreformers.

**Revendications**

1. Joint de soudure en acier inoxydable comprenant un joint de soudure à base d'acier inoxydable ferritique et d'acier inoxydable austénitique et un métal de soudure,
dans lequel ledit acier inoxydable ferritique comprend, en % en masse, C : 0,001 à 0,03 %, Si : 0,01 à 3,0 %, Mn : 0,01 à 2,0 %, P≤0,040 %, S≤0,010 %, Cr : 11,0 à 19,5 %, Ni≤3,0 %, N : 0,001 à 0,06 %, Al : 0,001 à 5,5 %, Ti : 0,001 à 0,25 %, et Nb : 0,001 à 0,60 %, et éventuellement un type ou deux types ou plus de Cu : 0,001 à 0,6 %, Mo : 0,001 à 2,1 %, Sn : 0,001 à 0,3 %, W : 0,001 à 0,30 %, Co : 0,001 à 0,30 %, V : 0,01 à 0,2 %, Zr : 0,001 à 0,03 %, B≤0,002 %, Mg≤0,002 %, Ca≤0,002 %, REM≤0,01 %, Sb : 0,001 à 0,30 %, Ga : 0,001 à 0,10 %, et Ta : 0,001 à 0,10 %, dans une relation de Ti, Nb, C, et N satisfaisant la formule (1) suivante, le reste étant du Fe et d'inévitables impuretés ;
dans lequel ledit acier inoxydable austénitique comprend, en % en masse, C : 0,001 à 0,1 %, Si : 0,01 à 4,0 %, Mn : 0,01 à 4,0 %, P≤0,040 %, S≤0,004 %, Cr : 15,0 à 26,0 %, Ni : 7,0 à 23,0 %, N : 0,001 à 0,25 %, et Al≤0,05 %, et éventuellement un type ou deux types ou plus de Cu : 0,001 à 2,5 %, Mo : 0,001 à 2,4 %, Sn : 0,001 à 0,03 %, W : 0,001 à 0,30 %, Co : 0,001 à 1,0 %, V : 0,01 à 0,2 %, Zr : 0,001 à 0,03 %, B≤0,002 %, Mg≤0,001 %, Ca≤0,002 %, REM≤0,01 %, Sb : 0,001 à 0,30 %, Ga : 0,001 à 0,10 %, Ta : 0,001 à 0,10 %, Ti : 0,03 à 0,35 %, et Nb : 0,03 à 0,30 %, le reste étant du Fe et d'inévitables impuretés ;
et le joint de soudure a une composition chimique comprenant, en % en masse : C : 0,1 % ou moins, Si : 3 % ou moins, Mn : 3 % ou moins, Cr : 17 à 25 %, , Ni : 7 à 20 %, et N : 0,1 % ou moins, le reste étant du Fe et d'inévitables impuretés et le joint de soudure a une dureté de surface de Hv250 ou moins ;

$$Ti/48+Nb/93 \geq 2(C/12+N/14) \ldots (1)$$

dans lequel l'acier inoxydable austénitique a une structure d'acier dans laquelle 90 % ou plus de la structure d'acier est occupée par la phase austénitique, et dans lequel l'acier inoxydable ferritique a une structure d'acier dans laquelle 90 % ou plus de la structure d'acier est occupée par la phase ferritique ;
où le joint de soudure est défini comme comprenant, dans la surface mesurée, la région du métal de soudure et la région dans la zone affectée par la chaleur HAZ adjacente au métal de soudure et représentant 20 % ou moins dans un rapport en surface.

2. Joint de soudure en acier inoxydable selon la revendication 1, dans lequel ledit acier inoxydable ferritique comprend, en % en masse, un type ou deux types ou plus de Cu : 0,001 à 0,6 %, Mo : 0,001 à 2,1 %, Sn : 0,001 à 0,3 %, W : 0,001 à 0,30 %, Co : 0,001 à 0,30 %, V : 0,01 à 0,2 %, Zr : 0,001 à 0,03 %, B≤0,002 %, Mg≤0,002 %, Ca≤0,002 %, REM≤0,01 %, Sb : 0,001 à 0,30 %, Ga : 0,001 à 0,10 %, et Ta : 0,001 à 0,10 %.

3. Joint de soudure en acier inoxydable selon la revendication 1, dans lequel ledit acier inoxydable austénitique comprend, en % en masse, un type ou deux types ou plus de Cu : 0,001 à 2,5 %, Mo : 0,001 à 2,4 %, Sn : 0,001 à 0,03 %, W : 0,001 à 0,30 %, Co : 0,001 à 1,0 %, V : 0,01 à 0,2 %, Zr : 0,001 à 0,03 %, B≤0,002 %, Mg≤0,001 %, Ca≤0,002 %, REM≤0,01 %, Sb : 0,001 à 0,30 %, Ga : 0,001 à 0,10 %, Ta : 0,001 à 0,10 %, Ti : 0,03 à 0,35 %, et Nb : 0,03 à 0,30 %.

4. Utilisation d'un acier inoxydable ferritique ayant la composition chimique telle que définie dans la revendication 1 ou 2 pour un joint de soudure en acier inoxydable selon la revendication 1 ou 2.

5. Utilisation d'un joint de soudure en acier inoxydable selon l'une quelconque des revendications 1 à 3 pour la fabrication d'une unité de reformage de combustible.

**EP 3 276 036 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003286005 A
- JP 2013166989 A
- JP 2003160844 A
- JP 2008156692 A
- JP 2009012070 A
- JP 2010023106 A